# EUROPEAN PATENT SPECIFICATION

(11) **EP 1 712 526 B1**
(45) Date of publication and mention of the grant of the patent: **01.07.2009**
(21) Application number: 06112530.8
(22) Date of filing: 12.04.2006
(51) Int. Cl.: C02F 3/28, B01D 21/00, C02F 9/02, C02F 9/04, C02F 101/10

(54) **Method and arrangement for wastewater purification**
Verfahren und Anordnung zur Abwasserreinigung
Procédé et système de purification des eaux usées

(30) Priority: 14.04.2005 FI 20055171
(43) Date of publication of application: 18.10.2006
(73) Proprietor: Uponor Innovation AB, 513 81 Fristad (SE)
(72) Inventor: Tast, Niila, 15270, Kukkila (FI)
(74) Representative: Huhtanen, Ossi Jaakko

(56) References cited:
- WO-A-98/21150
- US-A- 4 100 073
- US-A1- 2001 023 849
- US-B2- 6 576 130

## Description

### BACKGROUND OF THE INVENTION

The invention relates to a method for wastewater purification, the method comprising: conveying wastewater into a septic tank, in which solids separate from the wastewater, the wastewater being then conveyed to filter purification.

The invention further relates to an arrangement for purifying wastewater, the arrangement comprising: a septic tank for separating solids from the wastewater and absorption pipes connected to the septic tank to allow wastewater to be conveyed from the septic tank through the absorption pipes to filter purification.

In sparsely populated areas wastewater treatment of buildings is typically arranged separately for each building, because public utility services for wastewater treatment are usually not available. An advantageous solution for building-specific wastewater purification is to use a soil treatment system, where the purification takes place in two phases. In the first phase wastewater is pre-treated in a septic tank, where solids separate from the wastewater. In the second phase the wastewater is absorbed into soil or filtered and collected into subsurface drains from which the purified water is conveyed to a collecting well and further to an open ditch, for example. The solids accumulated in the septic tank, in turn, are then supplied to a municipal wastewater treatment plant, for example, from time to time.

In soil treatment systems based on absorption wastewaters coming from a building travel through an underground sewage pipe into a septic tank typically buried in the soil, except for its discharge opening. After separation of the solids, the purified wastewater is conveyed either directly from the septic tank or via a distribution well into subsoil absorption pipes located in an absorption field. The structure of a soil treatment system based on infiltration, in turn, is otherwise basically the same as that of an absorption- based system except that there are subsurface collecting drains laid beneath the absorption pipes in the purification field. These subsurface collecting drains receive the purified water and convey it to a collecting well. From the collecting well the purified water is conveyed through a discharge pipe into an open ditch or some other suitable location in the terrain.

Due to its simple components and its operational reliability, a soil treatment system is extremely well suitable solution for cleaning wastewater. However, because of increasingly stricter regulations imposed on wastewater treatment, the purification efficiency of a soil treatment system is not sufficient in all cases. The removal of phosphor from wastewater is particularly problematic, which is why water purification chemicals have to be used. Each purification chemical has an optimum dose determined in proportion to the amount of wastewater. In connection with soil treatment systems in particular it is fairly difficult to ensure this optimum dosage of the chemical at all times. For example, defining an average optimum dosage will lead to a situation where during high wastewater load in the system, the amount of chemical added to the wastewater will be too small and therefore a sufficient purification result is not achieved. On the other hand, if during holiday season, for example, a building is empty and no wastewater is produced, the dosage will be too big, the dispensing and use of the chemical thus causing unnecessary costs. Moreover, in connection with soil treatment systems it is relatively difficult to succeed in dispensing the chemical in a simple and convenient way to a point of the sewage system where the purification functions reliably and efficiently at all times. Document US 6576130 discloses a wastewater absorption field reclamation and maintenance system, wherein effluent is oxygenated such that biochemical oxygen demand is not reduced in the effluent, the oxygenated effluent being delivered to the absorption field. Document WO 98/21150 discloses a secondary sewage treatment system with a treatment vessel disposed within a septic tank.

### BRIEF DESCRIPTION OF THE INVENTION

It is an object of the invention to provide a novel solution for wastewater purification.

A method of the invention is characterized in that the wastewater is conveyed to the filter purification by pumping a predetermined batch of wastewater at a time, in that a predetermined dose of purification chemical is dispensed into a chamber of the septic tank in proportion to the batch to be pumped to the filter purification and in that the wastewater is conveyed to filter purification from a well or chamber situated downstream in the wastewater treatment process in relation to the chamber into which the purification chemical is dispensed.

An arrangement of the invention is characterized in that the arrangement comprises a pump configured to pump a predetermined batch of wastewater at a time to the filter purification and means for dispensing purification chemical into a chamber of the septic tank in proportion to the batch of wastewater to be pumped to the filter purification and in that the wastewater is arranged to be conveyed to the absorption pipes from a well or chamber situated downstream in the wastewater treatment process in relation to the chamber into which the purification chemical is dispensed.

According to the disclosed solution wastewater is purified by conveying the water into a septic tank where solids separate from the wastewater. The wastewater purified of the solids is then conveyed to filter purification, i.e. to an absorption or filter field, for example. The wastewater is supplied to the filter purification in predetermined batches pumped forward one batch at a time. An amount of chemical is dispensed into the septic tank in proportion to the batch to be pumped. This solution is relatively simple, yet most versatile and efficient. In addition, the servicing of the system, for example, can easily be contracted out, because the building in question does not need to be entered during servicing. It is also easy to find a location for the equipment of the system. Moreover, excavating is typically not needed after the system has been taken in use. Further, the sludge that is created, including chemical sludge, can be easily removed from the septic tank in a conventional way. Further still, the chemical dispensed into the septic tank enhances the operation of the tank.

According to an embodiment the chemical is dispensed into the septic tank by feeding it into a pipe leading to the tank. This allows the chemical to be mixed with the wastewater fairly efficiently. According to a second embodiment, a pump well is arranged after the septic tank, the water being then pumped from the well to filter purification. In this case some of the wastewater is preferably recirculated from the pump well into the septic tank, the chemical being then supplied into this recirculation pipe, whereby it mixes efficiently with the recirculated water and, consequently, extremely well with the wastewater in the septic tank. It is also possible to dispense the chemical directly into the septic tank.

### BRIEF DESCRIPTION OF THE FIGURES

The invention will be described in greater detail with reference to the accompanying drawings, in which
Figures 1a, 1b and 1c are partly sectional schematic side views of a wastewater purification system; and
Figures 2a, 2b and 2c are partly sectional schematic side views of a second wastewater purification system.

For the sake of clarity, the invention illustrated in the Figures is simplified. Like parts are indicated with like reference numerals.

### DETAILED DISCLOSURE OF SOME EMBODIMENTS OF THE INVENTION

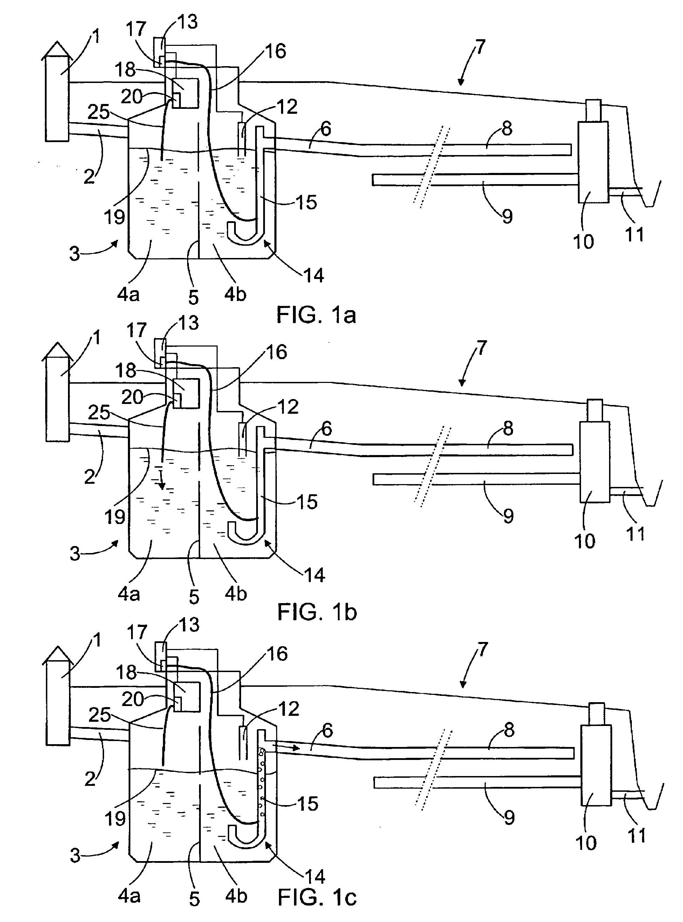

Figure 1a shows a building 1, such as a detached house, and the purification of its wastewater in a soil treatment system. The wastewater is conveyed by gravitation from the building 1 through a sewage pipe 2 into a septic tank 3. For the sake of clarity the different elements in Figures 1 a to 1 c are not in proportion with each other as regards their respective true dimensions. For example, the building 1 is proportionately smaller and the septic tank 3, correspondingly, proportionately bigger than they would actually be. The septic tank 3 may have a single chamber or it may be provided with two or more chambers. A septic tank 3 comprising two or more chambers may be formed by arranging single-chamber septic tanks one after the other or by dividing the inside of the septic tank 3 by means of a partition wall or walls. The septic tank 3 of Figure 1 a has two chambers 4a and 4b separated by a partition wall 5. Wastewater flows into the first chamber 4a. Water flow in the septic tank 3 is as slow as possible to provide enough time for solid particles to be separated. Solids heavier than water settle onto the bottom of the septic tank 3, whereas those lighter than water remain floating on the surface. From the first chamber 4a wastewater is allowed to flow into the second chamber 4b through openings in the partition wall 5.

When the solids have separated, the wastewater flows from the septic tank 3 through connecting pipes 6 into a filter field 7. Figure 1a thus shows a soil treatment system whose operation is based on soil infiltration. The connecting pipe 6 is connected to an absorption pipe 8. If desired, it is also possible to have a plural number of connecting pipes 6 and absorption pipes 8. Likewise, if desired, the wastewater may be conveyed from the septic tank into a distribution well connected to a plural number of absorption pipes 8. From the absorption pipes 8 the wastewater flows into a filtering layer. In the filtering layer the wastewater is filtered and purified and then collected into collecting pipes 9. From the collecting pipes 9 the purified wastewater is conveyed to a collecting well 10. From the collecting well 10 the filtered water is conveyed through a discharge pipe 11 into a suitable location in the terrain, such as an open ditch.

The septic tank 3 is provided with a surface level sensor 12 that informs a control unit 13 when the wastewater level 19 reaches a predetermined level. The control unit 13 then activates a chemical pump 20 to dispense purification chemical from a chemical tank 18 to the first chamber 4a, as shown in Figure 1 b.

The chemical pump 20 is preferably a hydraulic pump, the end of its chemical supply hose 25 being arranged below the wastewater surface. After the chemical feed, air is pumped into the wastewater, thereby allowing the chemical to mix extremely well with the wastewater.

Next, the control unit 13 commands an airlift pump 14 to pump wastewater from the second chamber 4b into the filter field 7. The airlift pump 14, i.e. the hydraulic pump, is provided with a vertical pipe 15, to the bottom end of which air is supplied through an air pipe 16. The air rises in bubbles up the vertical pipe 15, lifting up water at the same time as shown in Figure 1c. The air into the air pipe 16 comes from a blower 17. Although the power of the blower 17 is fairly low, this low-power blower allows a relatively efficient water pumping to be provided. The batch size to be pumped can be determined for example by keeping the airlift pump 14 going, i.e. by supplying air through the air pipe 16, for a predetermined period of time. It is also possible to provide the system with a surface level sensor to monitor when the level of the wastewater surface 19 drops to a lower control limit, the sensor then producing information that stops the discharge pumping.

The volume of the septic tank 3 may be 500 to 5000 litres, for example. Correspondingly, the amount pumped in a single discharge batch may be 30 to 200 litres, for example. According to one example the volume of the septic tank 3 may be 2000 litres and the amount of wastewater pumped in a single discharge batch about 100 litres, for example. Since the amount of discharge pumping is typically relatively small in proportion to the total amount of wastewater in the septic tank, it is usually not significant whether a new chemical dose is delivered into the wastewater before or after the discharge pumping. However, since the chemical dosage is associated with the discharge pumping, it is possible to determine a suitable dosage of the chemical because the flow rate of the wastewater is known on the basis of the volume of the pumping batch. The purification chemical is relatively simple to dispense into the septic tank and therefore the configuration of the purification system remains relatively simple as well.

Instead of supplying the chemical into the septic tank 3 directly, as shown in Figure 1b, it is also possible to deliver it into the septic tank 3 for example by feeding the chemical into a sewage pipe 2 leading to the septic tank 3. The chemical thus mixes with the wastewater flowing into the septic tank and upon arrival into the septic tank 3 the mixture of wastewater and chemical mixes quite well with the wastewater in the septic tank 3.

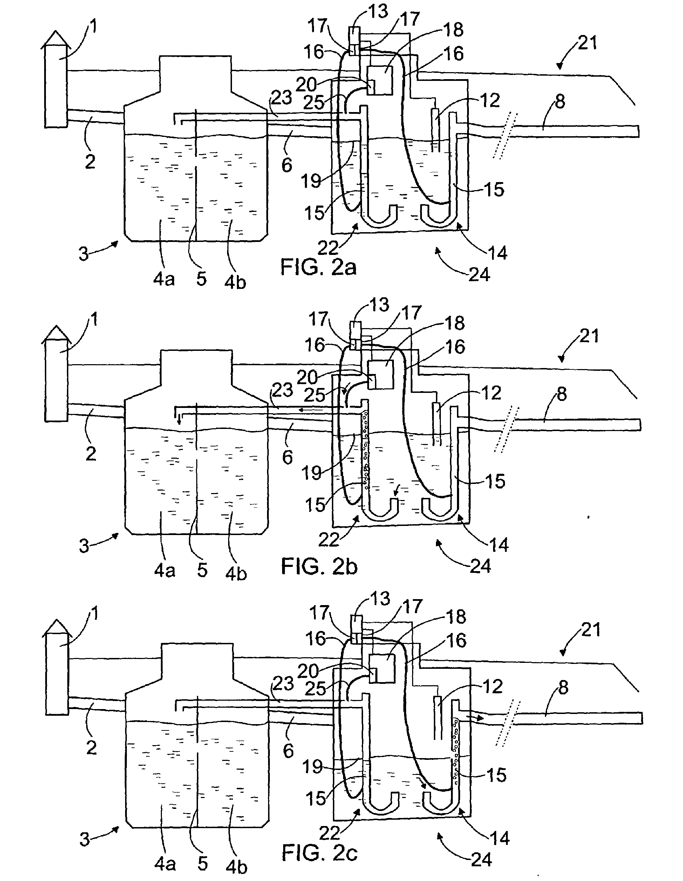

Figures 2a to 2c show an arrangement for wastewater purification where soil treatment is carried out by means of an absorption field 21. When an absorption field 21 is used, the pre-treated wastewater is conveyed through absorption pipes 8 straight into the ground.

Further, Figures 2a to 2c show a pump well 24 arranged between the septic tank and the purification area in the ground. Similarly as in Figures 1 a to 1c, also in Figures 2a to 2c the dimensions of the elements in relation to each other differ, for the sake of clarity, from what they actually are. The true size of the pump well 24, for example, is typically significantly smaller than that of the septic tank 3. Wastewater flows into the pump well 24 from the septic tank 3 by gravitation. The pump well 24 contains not only an airlift pump 14 for pumping the water into soil infiltration but also a second pump, i.e. a recirculation pump 22. The recirculation pump 22 is preferably an airlift pump that operates efficiently even with low power consumption.

When the surface level sensor 12 in the pump well 24 detects that the wastewater surface level 19 reaches its upper control limit, the control unit 13 commands the chemical pump 20 to supply a chemical dose from the chemical tank 18 into a recirculation pipe 23, as shown in Figure 2b. At the same time, the recirculation pump 22 is switched on and wastewater is pumped back from the pump well 24 through the recirculation pipe 23 into the septic tank 3. The recirculation pipe 23 is preferably connected to the first chamber 4a of the septic tank to provide enough time for the chemical to act in the septic tank 3. It is also possible to connect the recirculation pipe 23 to the sewage pipe 2 leading to the septic tank 3.

With the chemical supplied into the recirculation pipe 23 at the same time as wastewater is being pumped into the recirculation pipe 23 by means of the recirculation pump 22, the recirculated wastewater and the chemical mix fairly well already in the recirculation pipe 23. This mixture then further mixes extremely well with the wastewater in the septic tank 3, whereby a most efficient and uniform impact of the chemical is achieved. In other words, the recirculation pump flow allows the recirculated wastewater and the chemical to be mixed extremely well. In the septic tank 3 the impurities in the wastewater again cause flocculation and sedimentation that settles onto the bottom of the septic tank.

After the chemical has been fed into the septic tank 3, the airlift pump 14 is switched on to pump wastewater from the pump well 24 into the absorption field 21, as shown in Figure 2c. Also in this case it is possible to determine a discharge pump batch on the basis of how long the pump is driven, or by means of a sensor detecting the lower control limit of the surface.

The volume of the pump well may be 200 to 1000 litres, for example. The amount of wastewater to be pumped back by means of the recirculation pump 22 may be 30 litres, for example, and the amount of wastewater to be pumped into the filter field 21 may be 100 litres, for example. Also in this case the discharge pumping, the recirculation pumping and the simultaneous chemical supply may take place in a reverse order, instead of the one disclosed above. However, when airlift pumps are used, recirculation pumping and chemical dosage are preferably carried out first to enable a controlled recirculation pumping with full airlift pump capacity, thus ensuring that the amount of recirculated fluid is sufficient in all situations.

Also in the case illustrated in Figures 2a to 2c the chemical may be dispensed directly into the septic tank 3. Consequently, the recirculation pump 22 and the recirculation pipe 23 are not necessarily needed at all.

Instead of airlift pumps, the disclosed solutions may naturally also be implemented using immersion pumps or other suitable pumps. Immersion pumps may be used for example for discharge pumping wastewater into soil infiltration in cases where the wastewater must first be conveyed upwards, for example, or when the suction pipes are located at a distance, or a high pumping rate is required for some other reason.

The chemical to be dispensed may be any chemical suitable for wastewater purification. For example, the chemical may be an aluminium-or iron-based chemical, such as polyaluminium chloride.

The solution of Figures 2a to 2c is extremely well applicable to already existing configurations. It is implemented by adding the pump well 24 and the associated components and pumps, chemical tanks, control centre and the necessary plumbing and connections between a septic tank and a soil filter already provided.

As disclosed above, the purifying chemical is dispensed into a septic tank chamber and the wastewater is then conveyed to filter purification from a well or chamber different than the one into which the chemical was dispensed. In the wastewater treatment process this well or chamber from which the wastewater is conveyed to filter purification comes after the chamber into which the purifying chemical is dispensed. In other words, from the chamber into which the chemical is dispensed there is no outlet fitting connected to the absorption pipes 8, but the outlet fitting connected to the absorption pipes 8 is arranged to a well or chamber further downstream in the process. Therefore solid particles and lumps created by the impact of the purifying chemicals are produced in the septic tank chamber from which wastewater is not conveyed directly to filter purification and thus it is possible to prevent chemical sludge from entering the filter purification and blocking or contaminating the filter field or the absorption field.

In some cases the characteristics disclosed in the present application may be applied as such, irrespective of the other characteristics. On the other hand, the characteristics disclosed here may also be combined, if necessary, to provide different combinations.

The drawings and the related specification are only meant to illustrate the inventive idea. The details of the invention may vary within the scope of the claims.

A purification chemical dose does not necessarily have to be dispensed in connection with each pumping but, if desired, a dose may be delivered with every second or third pumping, for example, or less frequently even.

The chemical is most preferably supplied, as described above, into the first chamber 4a of the septic tank 3, thereby providing a most efficient and simple way to prevent the chemical sludge from entering the absorption or filter field.

Filter purification may therefore be implemented, as described above, by means of soil treatment, i.e. by conveying the wastewater either into an absorption field or a filter field. It is also possible to implement filter purification by means of a peat filter, a mineral wool filter or by applying some other suitable filter purification method.

## Claims

1. A method for wastewater purification, the method comprising: conveying wastewater into a septic tank (3), in which solids separate from the wastewater, the wastewater being then conveyed to filter purification, **characterized in that** the wastewater is conveyed to the filter purification by pumping a predetermined batch of wastewater at a time, **in that** a predetermined dose of purification chemical is dispensed into a chamber of the septic tank (3) in proportion to the batch to be pumped to the filter purification and **in that** the wastewater is conveyed to filter purification from a well or chamber situated downstream in the wastewater treatment process in relation to the chamber into which the purification chemical is dispensed.

2. A method according to claim 1, **characterized in that** the chemical is dispensed into the septic tank (3) by feeding it into a pipe (2, 23) leading to the septic tank (3).

3. A method according to claim 1 or 2, **characterized by** conveying wastewater from the septic tank (3) into a pump well (24) and pumping wastewater from the pump well (24) to the filter purification.

4. A method according to claim 3, **characterized in that** some of the wastewater that has entered the pump well (24) is recirculated to the septic tank (3), the chemical dose to be supplied into the septic tank (3) being dispensed into the wastewater recirculated to the septic tank (3).

5. A method according to claim 1, **characterized in that** after the chemical has been supplied, air is pumped into the mixture of wastewater and chemical to mix the chemical and the wastewater.

6. A method according to claim 5, **characterized in that** the chemical and the air are supplied through one and the same supply hose (25).

7. A method according to any one of the preceding claims, **characterized in that** a chemical dose is delivered into the septic tank (3) every time a predetermined batch of wastewater is pumped to the filter purification.

8. A method according to any one of the preceding claims, **characterized in that** the septic tank (3) is provided with at least two chambers (4a, 4b), the purification chemical being dispensed into the first chamber (4a) of the septic tank (3).

9. A method according to any one of the preceding claims, **characterized in that** the filter purification consists of a soil treatment.

10. A method according to any one of claims 1 to 8, **characterized in that** the filter purification is implemented by means of a mineral wool filter or a peat filter.

11. An arrangement for purifying wastewater, the arrangement comprising: a septic tank (3) for separating solids from the wastewater and absorption pipes (8) connected to the septic tank (3) to allow wastewater to be conveyed from the septic tank (3) through the absorption pipes (8) to filter purification, **characterized in that** the arrangement comprises a pump (14) configured to pump a predetermined batch of wastewater at a time to the filter purification and means for dispensing purification chemical into a chamber of the septic tank (3) in proportion to the batch of wastewater to be pumped to the filter purification and **in that** the wastewater is arranged to be conveyed to the absorption pipes (8) from a well or chamber situated downstream in the wastewater treatment process in relation to the chamber into which the purification chemical is dispensed.

12. An arrangement according to claim 11, **characterized in that** the arrangement comprises a supply hose (25) for dispensing the chemical, one end of the hose being arranged below the wastewater surface (19) in the septic tank (3), the arrangement further comprising means for supplying air through the supply hose (25) into the mixture of chemical and wastewater to mix the chemical and the wastewater.

13. An arrangement according to claim 11, **characterized in that** the means for dispensing the chemical are arranged to supply the chemical into a pipe (2, 23) leading to the septic tank (3).

14. An arrangement according to claim 11, **characterized in that** the arrangement comprises a pump well (24), into which the wastewater is arranged to be conveyed from the septic tank (3), and a pump (14) arranged into the pump well (24) for pumping the wastewater from the pump well (24) to the filter purification.

15. An arrangement according to claim 14, **characterized in that** the pump well (24) is provided with a recirculation pump (22) and the pump well (24) is connected to the septic tank (3) by a recirculation pipe (23) and that the chemical is arranged to be supplied into the recirculation pipe (23).

16. An arrangement according to any one of claims 11 to 15, **characterized in that** the septic tank (3) is provided with at least two chambers (4a, 4b) and the purification chemical is arranged to be dispensed into a first chamber (4a) of the septic tank (3).

17. An arrangement according to any one of claims 11 to 16, **characterized in that** the pump for pumping wastewater to the filter purification is an airlift pump (14).

18. An arrangement according to any one of claims 11 to 17, **characterized in that** the filter purification is arranged to be carried out by means of soil treatment.

19. An arrangement according to any one of claims 11 to 17, **characterized in that** the filter purification is arranged to be carried out by means of a mineral wool filter or a peat filter.

## Patentansprüche

1. Verfahren zur Abwasserreinigung, wobei das Verfahren umfasst: das Leiten von Abwasser in einen Klärtank (3), in dem sich Feststoffe von dem Abwasser absetzen, wobei das Abwasser anschließend einer Filtration zugeführt wird, **dadurch gekennzeichnet, dass** das Abwasser der Filtration durch Pumpen einer vorbestimmten Menge an Abwasser auf einmal zugeführt wird, dass eine vorbestimmte Dosis Reinigungschemikalie in eine Kammer des Klärtanks (3) ausgegeben wird, die proportional zu der zur Filtration gepumpten Menge ist, und dass das Abwasser der Filtration aus einem Schacht oder einer Kammer zugeführt wird, der in dem Abwasseraufbereitungsprozess in bezug auf die Kammer, in welche die Reinigungschemikalie ausgegeben wird, stromabwärts angeordnet ist.

2. Verfahren nach Anspruch 1, **dadurch gekennzeichnet, dass** die Chemikalie in den Klärtank (3) ausgegeben wird, indem sie in ein zu dem Klärtank (3) führendes Rohr (2, 23) geleitet wird.

3. Verfahren nach Anspruch 1 oder 2, **dadurch gekennzeichnet, dass** Abwasser von dem Klärtank (3) in einen Pumpenschacht (24) gefördert wird und das Abwasser aus dem Pumpenschacht (24) zu der Filtration gepumpt wird.

4. Verfahren nach Anspruch 3, **dadurch gekennzeichnet, dass** ein Teil des Abwassers, das in den Pumpenschacht (24) gelangt ist, zu dem Klärtank (3) zurückgeleitet wird, wobei die in den Klärtank (3) zu leitende Chemikaliendosis in das zu dem Klärtank (3) zurückgeleitete Abwasser ausgegeben wird.

5. Verfahren nach Anspruch 1, **dadurch gekennzeichnet, dass** nach dem Zuführen der Chemikalie Luft in die Mischung aus Abwasser und Chemikalie gepumpt wird, um die Chemikalie und das Abwasser zu mischen.

6. Verfahren nach Anspruch 5, **dadurch gekennzeichnet, dass** die Chemikalie und die Luft durch den selben Zuführschlauch (25) zugeführt werden.

7. Verfahren nach einem der vorhergehenden Ansprüche, **dadurch gekennzeichnet, dass** die Chemikaliendosis jedes Mal in den Klärtank (3) ausgegeben wird, wenn eine vorbestimmte Menge Abwasser zu der Filtration gepumpt wird.

8. Verfahren nach einem der vorhergehenden Ansprüche, **dadurch gekennzeichnet, dass** der Klärtank (3) mit mindestens zwei Kammern (4a, 4b) versehen ist, wobei die Reinigungschemikalie in die erste Kammer (4a) des Klärtanks (3) ausgegeben wird.

9. Verfahren nach einem der vorhergehenden Ansprüche, **dadurch gekennzeichnet, dass** die Filterreinigung aus einer Boden-Aufbereitung besteht.

10. Verfahren nach einem der Ansprüche 1 bis 8, **dadurch gekennzeichnet, dass** die Filtration mittels eines Mineralwollefilters oder eines Torffilters erfolgt.

11. Anordnung zum Reinigen von Abwasser, wobei die Anordnung aufweist: einen Klärtank (3) zum Separieren von Feststoffen von dem Abwasser und Absorptionsrohre (8), die mit dem Klärtank (3) verbunden sind, um das Leiten von Abwasser von dem Klärtank (3) durch die Absorptionsrohre (8) einer Filtration zuzuführen, **dadurch gekennzeichnet, dass** die Anordnung eine Pumpe (14), die zum Pumpen einer vorbestimmten Menge Abwasser auf einmal zu der Filtration ausgebildet ist, und Einrichtungen umfasst, welche eine Reinigungschemikalie proportional zu der zu der Filtration zu pumpenden Abwassermenge in eine Kammer des Klärtanks (3) ausgeben, und dass das Abwasser in die Absorptionsrohre (8) aus einem Schacht oder einer Kammer gefördert wird, die in dem Abwasseraufbereitungsprozess in bezug auf die Kammer, in welche die Reinigungschemikalie ausgegeben wird, stromabwärts angeordnet ist.

12. Anordnung nach Anspruch 11, **dadurch gekennzeichnet, dass** die Anordnung einen Zuführschlauch (25) zum Ausgeben der Chemikalie aufweist, wobei ein Ende des Schlauchs unter der Abwasseroberfläche (19) in dem Klärtank (3) angeordnet ist, wobei die Anordnung ferner Einrichtungen zum Zuführen von Luft durch den Zuführschlauch (25) in die Mischung aus Chemikalie und Abwasser aufweist, um die Chemikalie und das Abwasser zu mischen.

13. Anordnung nach Anspruch 11, **dadurch gekennzeichnet, dass** die Einrichtungen zum Ausgeben der Chemikalie derart angeordnet sind, dass sie die Chemikalie in ein zu dem Klärtank (3) führendes Rohr (2, 23) leiten.

14. Anordnung nach Anspruch 11, **dadurch gekennzeichnet, dass** die Anordnung einen Pumpenschacht (24), in welchen das Abwasser aus dem Klärtank (3) gefördert wird, und eine in dem Pumpenschacht (24) angeordnete Pumpe (14) aufweist, um das Abwasser aus dem Pumpenschacht (24) zu der Filtration zu pumpen.

15. Anordnung nach Anspruch 14, **dadurch gekennzeichnet, dass** der Pumpenschacht mit einer Rücksaugpumpe (22) versehen ist, und der Pumpenschacht (24) mit dem Klärtank (3) durch ein Rücklaufrohr (23) verbunden ist, und dass die Chemikalie in das Rücklaufrohr (23) zugeführt wird.

16. Anordnung nach einem der Ansprüche 11 bis 15, **dadurch gekennzeichnet, dass** der Klärtank (3) mit mindestens zwei Kammern (4a, 4b) versehen ist und die Reinigungschemikalie in eine erste Kammer (4a) des Klärtanks (3) ausgegeben wird.

17. Anordnung nach einem der Ansprüche 11 bis 16, **dadurch gekennzeichnet, dass** die Pumpe zum Pumpen von Abwasser zur Filtration ein Druckluftheber (14) ist.

18. Anordnung nach einem der Ansprüche 11 bis 17, **dadurch gekennzeichnet, dass** die Filtration durch Boden-Aufbereitung erfolgt.

19. Anordnung nach einem der Ansprüche 11 bis 17, **dadurch gekennzeichnet, dass** die Filtration mittels eines Mineralwollefilters oder eines Torffilters erfolgt.

## Revendications

1. Procédé de purification d'eaux usées, le procédé comprenant :
le transfert des eaux usées dans une fosse septique (3), dans laquelle des solides se séparent des eaux usées, les eaux usées étant transférées vers un filtre de purification, **caractérisé en ce que** les eaux usées sont transférés vers le filtre de purification par pompage d'un volume de traitement prédéterminé d'eaux usées à la fois, **en ce qu'**une dose prédéterminée d'agent chimique de purification est distribuée dans une chambre de la fosse septique (3) proportionnellement au volume de traitement à pomper vers le filtre de purification et **en ce que** les eaux usées sont transférées vers un filtre de purification à partir d'un puits ou chambre situé en aval du processus de traitement d'eaux usées par rapport à la chambre dans laquelle l'agent chimique de purification est distribué.

2. Procédé selon la revendication 1, **caractérisé en ce que** l'agent chimique est distribué dans la fosse septique (3) en l'introduisant dans une conduite (2, 23) conduisant à la fosse septique (3).

3. Procédé selon la revendication 1 ou 2, **caractérisé par** le transfert des eaux usées à partir de la fosse septique (3) dans un puits de pompe (24) et le pompage des eaux usées à partir du puits de pompe (24) vers le filtre de purification.

4. Procédé selon la revendication 3, **caractérisé en ce qu'**une partie des eaux usées qui est entrée dans le puits de pompe (24) est remise en circulation vers la fosse septique (3), la dose d'agent chimique à délivrer dans la fosse septique (3) étant distribuée dans les eaux usées remises en circulation vers la fosse septique (3).

5. Procédé selon la revendication 1, **caractérisé en ce que**, après l'agent chimique a été délivré, de l'air est refoulé dans le mélange d'eaux usées et d'agent chimique afin de mélanger l'agent chimique et les eaux usées.

6. Procédé selon la revendication 5, **caractérisé en ce que** l'agent chimique et l'air sont délivrés à travers un seul et même tuyau d'alimentation (25).

7. Procédé selon l'une quelconque des revendications précédentes,
**caractérisé en ce qu'**une dose d'agent chimique est délivrée dans la fosse septique (3) chaque fois qu'un volume de traitement prédéterminé d'eaux usées est pompé vers le filtre de purification.

8. Procédé selon l'une quelconque des revendications précédentes, **caractérisé en ce que** la fosse septique (3) comporte au moins de deux chambres (4a, 4b), l'agent chimique de purification étant distribué dans la première chambre (4a) de la fosse septique (3).

9. Procédé selon l'une quelconque des revendications précédentes, **caractérisé en ce que** la purification par filtre consiste en un traitement de sol.

10. Procédé selon l'une quelconque des revendications 1 à 8, **caractérisé en ce que** le filtre de purification est mis en oeuvre au moyen d'un filtre laine minérale ou d'un filtre de tourbe.

11. Agencement de purification des eaux usées, l'agencement comprenant : une fosse septique (3), destinée à séparer des solides des eaux usées, et des tuyauteries d'absorption (8) raccordées à la fosse septique (3) afin de permettre le transfert des eaux usées à partir de la fosse septique (3) par l'intermédiaire des tuyauterie d'absorption (8) vers le filtre de purification, **caractérisé en ce que** l'agencement comprend une pompe (14) configurée de manière à pomper un volume de traitement prédéterminé d'eaux usées à la fois vers le filtre de purification et des moyens destinés à distribuer de l'agent chimique de purification dans une chambre de la fosse septique (3) proportionnellement au volume de traitement d'eaux usées à pomper vers le filtre de purification et **en ce que** les eaux usées sont agencées de manière à être transférées vers les tuyauteries d'absorption (8) à partir d'un puits ou chambre situé en aval dans le processus de traitement des eaux usées par rapport à la chambre dans laquelle l'agent chimique de purification est distribué.

12. Agencement selon la revendication 11, **caractérisé en ce que** l'agencement comprend une tuyau d'alimentation (25) destiné à distribuer l'agent chimique, une extrémité du tuyau étant agencée au-dessous de la surface des eaux usées (19) dans la fosse septique (3), l'agencement comprenant, en outre, un moyen destiné à délivrer de l'air par l'intermédiaire du tuyau d'alimentation (25) dans le mélange d'agent chimique et d'eaux usées afin de mélanger l'agent chimique et les eaux usées.

13. Agencement selon la revendication 11, **caractérisé en ce que** les moyens de distribution de l'agent chimique sont agencés afin de délivrer l'agent chimique dans une tuyauterie (2, 23) conduisant à la fosse septique (3).

14. Agencement selon la revendication 11, **caractérisé en ce que** l'agencement comprend un puits de pompe (24), dans lequel les eaux usées sont agencées de manière à être transférées à partir de la fosse septique (3), et une pompe (14) agencée dans le puits de pompe (24) afin de pomper les eaux usées à partir du puits de pompe (24) vers le filtre de purification.

15. Agencement selon la revendication 14, **caractérisé en ce que** le puits de pompe (24) comporte une pompe de recirculation (22) et le puits de pompe (24) est relié à la fosse septique (3) par une tuyauterie de recirculation (23) et **en ce que** l'agent chimique est agencé de manière à être délivré dans la tuyauterie de recirculation (23).

16. Agencement selon l'une quelconque de revendications 11 à 15, **caractérisé en ce que** la fosse septique (3) comporte au moins deux chambres (4a, 4b) et l'agent chimique de purification est agencé de manière à être distribué dans une première chambre (4a) de la fosse septique (3).

17. Agencement selon l'une quelconque de revendications 11 à 16, **caractérisé en ce que** la pompe destinée à pomper les eaux usées vers le filtre de purification est une pompe élévatrice à air comprimé (14).

18. Agencement selon l'une quelconque de revendications 11 à 17, **caractérisé en ce que** le filtre de purification est agencé de manière à être mis en oeuvre au moyen d'un traitement de sol.

19. Agencement selon l'une quelconque de revendications 11 à 17, **caractérisé en ce que** le filtre de purification est agencé de manière à être mise en oeuvre au moyen d'un filtre de laine minérale ou d'un filtre de tourbe.
